# EUROPÄISCHE PATENTSCHRIFT

(11) **EP 0 333 636 B1**
(45) Veröffentlichungstag und Bekanntmachung des Hinweises auf die Patenterteilung: **02.03.1994**
(21) Anmeldenummer: 89730069.5
(22) Anmeldetag: 14.03.1989
(51) Int. Cl.: G02B 6/44, G02B 6/00

(54) **Lichtleiter**
Light guide
Guide de lumière

(30) Priorität: 14.03.1988 DE 3808828
(43) Veröffentlichungstag der Anmeldung: 20.09.1989
(73) Patentinhaber: Konsolke, Heinz, D-12169 Berlin (DE)
(72) Erfinder: Konsolke, Heinz, D-12169 Berlin (DE)
(74) Vertreter: Christiansen, Henning, Dipl.-Ing.

(56) Entgegenhaltungen:
- FR-A- 2 455 296
- US-A- 3 817 595

## Beschreibung

Die Erfindung betrifft einen Lichtleiter der im Oberbegriff des Anspruchs 1 angegebenen Art sowie ein verfahren zu seiner Herstellung.

Aus der FR-A-2 455 296 ist ein Lichtleiter bekannt, in dem eine optische Faser in einer biegsamen Umhüllung frei beweglich angeordnet ist. Bei einer Wendelung der Umhüllung erfährt die optische Faser ebenfalls eine Wendelung. Die bei einer Dehnung der Umhüllung auftretende Torsion wirkt sowohl auf die Umhüllung als auch auf die inliegende optische Faser.

Aus der DE-PS 21 21 581 C2 ist ein weiterer Lichtleiter bekannt, in dem ein Bündel aus einer Mehrzahl von biegsamen optischen Fasern in einem aus elastischen Material bestehenden Mantel angeordnet ist. Dabei ist die Mehrzahl der Fasern derart angeordnet, daß sie sich relativ zu dem Mantel frei bewegen kann. Das Gebilde aus Mantel und optischen Fasern ist in einer schraubenlinienförmigen Gestalt ausgebildet. Das elastische Material ist ausgehärtet und verfestigt, wobei die optischen Fasern weiterhin frei bleiben, sich relativ zueinander und relativ zu dem elastischen Mantel zu bewegen. Die optischen Fasern sind an jedem Ende durch ringförmige Klemmteile aus rostfreiem Stahl zusammengehalten. Die Klemmteile sind beispielsweise mittels eines nicht dargestellten geeigneten Klebmittels, wie Epoxyharz, an der Innenfläche eines Mantels aus elastischem Material befestigt. Das elastische Material ist ein Materal, welches ein "plastisches Gedächtnis" hat, indem es das Bestreben hat, in die Gestalt zurückzukehren, in der es verfestigt worden ist, beispielsweise Kautschuk, Polyvinylchlorid, Polyäthylen usw. Die optischen Fasern können sich mit Ausnahme der durch die Klemmteile bewirkten Beschränkung ihrer Bewegung relativ zueinander und zu dem elastischen Mantel frei bewegen, wie es durch den Spalt zwischen den optischen Fasern und der Innenfläche des Mantels angedeutet ist.

Beide bekannte Lichtleiteranordnungen haben jedoch den Nachteil, daß die Lichtleitfasern und der Mantel beim Dehnen mit tordiert werden. Die Leichtleitfasern sind zwar relativ zueinander und relativ zum Mantel beweglich, dies reicht jedoch bei einer spiralförmigen Anordnung mit gebrauchsmäßiger Dehnung nicht aus. Die Lichtleiter werden tordiert und die Möglichkeit, daß die Fasern brechen, ist gegeben.

Der Erfindung liegt die Aufgabe zugrunde, einen Lichtleiter der eingangs genannten Gattung mit Eigenschaften zu schaffen, wie sie beispielsweise denjenigen einer spiralisierten Telefonhörerschnur entsprechen, welche sich nach Längendehnung wieder zusammenzieht und somit im Ruhezustand wenig Raum einnimmt, wobei unter Gewährung der optischen Übertragungseigenschaften die Bruchgefahr der Fasern im Betrieb minimal sein soll sowie ein Verfahren zur Herstellung eines solchen Lichtleiters anzugeben.

Diese Aufgabe wird mit den kennzeichnenden Merkmalen des Anspruchs 1 bzw. mit den kennzeichnenden Merkmalen des Anspruchs 7 gelöst.

Der Erfindung liegt die Erkenntnis zugrunde, daß trotz der kritischen optischen und mechanischen Eigenschaften von Lichtleitfasern ein Lichtleiter in spiralisierter (Helix-) Form erzeug- und anwendbar ist, mit dessen Längung keine Verschlechterung der Bruch- bzw. optischen Eigenschaften verbunden ist, wenn bei der Herstellung bereits dafür gesorgt ist, daß der Leiter im Längungsbereich seine optischen Eigenschaften behält und nicht übermäßig tordiert wird. Obgleich sich der Durchmesser der Wendeln verringert, wenn die Anordnung gestreckt wird, vergrößert sich wegen der zunehmenden Ausrichtung der differentiellen Längenelemente der Ummantelung in axialer Richtung deren lokale Krümmung kaum. Die statt dessen eintretende Torsion der Glasfaserleiter ist hinnehmbar, weil damit keine wesentliche Beeinträchtigung der lichtleitenden Eigenschaften verbunden ist, wenn durch Vorverformung dafür Sorge getragen wird, daß die Torsion bei halber Längung der Wendel in etwa ihre neutrale Phase annimmt. Die Wendelform der Gesamtanordnung wird bevorzugt durch die Elastizitätseigenschaften des Mantels bestimmt.

Zur Herabsetzung der Bruchgefahr werden die Glasfasern bei der Herstellung also entgegen der bei der Längung des Leiters auftretenden Torsion vortordiert. Auf diese Weise läßt sich auch bei gelängtem Leiter eine stets monotone Tordierung der Glasfasern erzielen, wie es für einige Anwendungen günstig ist.

Bei einem Verfahren zur Herstellung derartiger Lichtleiter wird das "Formgedächtnis" der Ummantelung ausgenutzt, wobei bei der Verformung der minimale Radius der Lichtleiterfasern im Betrieb wesentlich unterschritten werden kann, so daß ein fertiggestellter ummantelter Lichtleiter durch Verformung spiralisierbar ist.

Ein derartiger Lichtleiter läßt sich in vorteilhafter Weise in allen Geräten einsetzen, bei denen eine Signalübertragung über einen flexiblen Leiter erfolgen soll. Durch den Verzicht auf elektrische Energie außerhalb des Gehäuses des zugehörigen Signalsende- bzw. Empfangsgeräts ist insbesondere die Verwendung unter explosionsgeschützten Bedingungen günstig.

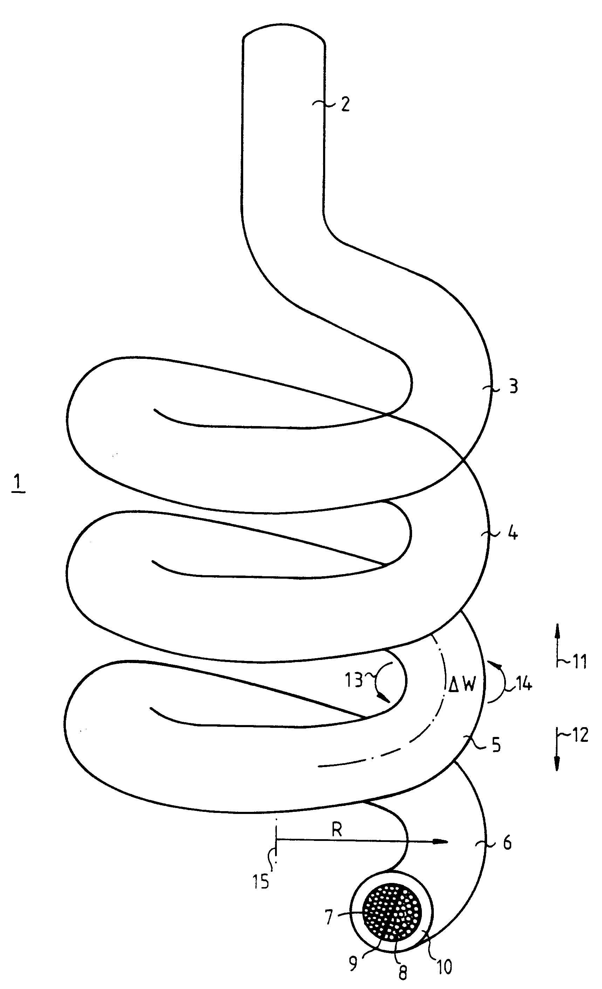

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt.

Die einzige Figur zeigt ein Ausführungsbeispiel des erfindungsgemäßen Lichtleiters.

Der in der Figur dargestellte helixförmige Lichtleiter 1 weist einen ungewendelten, gestreckten Anfangsbereich 2 auf. Der Bereich 2 erstreckt sich bis zu dem Beginn der Wendeln 3 bis 6, wobei die letzte Wendel 6 geschnitten dargestellt ist. Ein praktisch ausgeführtes Kabel geht am Ende des gewendelten Bereiches wieder in einen - in der Zeichnung nicht dargestellten - gestreckten Bereich über, der in seiner Ausformung dem Bereich 2 entspricht. Diese Bereiche sind zur Einleitung in das jeweils angeschlossene Gerät vorgesehen.

Innerhalb der Wendeln befinden sich Lichtleitfasern in zwei Gruppen 7 und 8, welche durch eine lichtundurchlässige Schicht 9 getrennt sind. Die Lichtleitfaserbündel 7 und 8 sind umgeben von einer Ummantelung 10 aus Kunststoff. Bei den Lichtleitfasern handelt es sich um 50, 62 oder 125µ Gradientenfasern. Es ist ersichtlich, daß bei Längung der Wendeln (Pfeile 11 und 12) eine Torsion der differentiellen Wendelelemente ΔW eintritt. Diese Torsion ist durch die Pfeile 13 und 14 angedeutet. Die vorzugsweise aus Polyurethan oder auch aus Polyäthylen bestehende Umhüllung weist eine Formgedächtnis auf, welches die Wendeln nach einer Dehnung in Richtung der Pfeile 11 und 12 wieder in ihre Ausgangskonfiguration zurückgelangen läßt. Und das Element ΔW stellt ein Längenelement in axialer Richtung der Lichtleiteranordnung dar (strichpunktierte Linie).

Die Konfiguration und Elastizität der Anordnung wird insbesondere durch die Eigenschaften der Ummantelung bestimmt, wobei die Lichtleitfasern, welche die Bündel 7 und 8 bilden, aus Glas bestehen und ursprünglich gestreckt verlaufen. Die Elastizität der Glasfasern, welche in die gestreckte Stellung zurückgelangen wollen, wird aber durch die Verformung des Mantels 10 überkompensiert. Der mittlere Radius R bezogen auf die Mittelachse der Wendel ist so groß bemessen, daß die lichtleitenden Eigenschaften der Faser nicht oder nur unwesentlich herabgesetzt sind. Die Herabsetzung der Lichtleitfähigkeit pro Längenelement der Wendel liegt im Bereich der Dämpfung der Lichtleitfasern in gestrecktem Zustand.

Das Verfahren zur Herstellung der Wendeln beruht nun darauf, daß die Wendeln in einem Bereich vorgekrümmt werden, der zwar außerhalb der maximal zulässigen Biegung der Lichtleitfasern liegt, aber den Bereich der Krümmung ohne wesentliche Lichtverluste im Betrieb wesentlich unterschreitet.

Dieses Verhältnis ist überraschenderweise so, daß die bleibende Verformung gängiger für eine derartige Wendelung (Spiralisierung) von Kabeln geeigneter Kunststoffe erreicht werden kann, ohne daß die Glasfasern übermäßig beansprucht werden.

Der dargestellte Lichtleiter eignet sich, insbesondere mit mehreren optisch voneinander getrennten Lichtleitbündeln, die alle für sich die Bedingungen gemäß der Erfindung erfüllen, insbesondere zur Steuerung von manuell oder durch automatische Handhabungsgeräte zu bedienenden Werkzeugen. Am Ende können Lichtgriffel oder Lichtschranken bzw. Bewegeungsmelder vorgesehen, welche nach Reflektion außerhalb des Lichtleiters die von der Steuereinrichtung ausgesandten Signale zu dieser in veränderter oder unveränderter Form zurückübermitteln, so daß daraus entsprechende Informationen ableitbar sind.

Es lassen sich damit alle jene sensitiven Elemente ohne Benutzung einer Stromquelle betreiben, welche die Intensität (oder auch den Farbanteil) eines Lichtstrahls in Abhängigkeit von einem am Meßeingang erscheinenden Ereignis modulieren. Damit entfallen zusätzliche stromführende Leiter im Mantel. Außerdem ist jede Gefährdung in explosionsgefährlichen Räumen ausgeschlossen. Zusätzlich ist damit der Vorteil verbunden, daß elektromagnetische Einstreuungen bei der Signalübertragung keine Rolle spielen, d.h. die Signalleitungen nicht besonders elektromagnetisch geschirmt werden müssen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen.

## Patentansprüche

1. Lichtleiter (1), bestehend aus einer gewendelten Bündelader, die aus einer Ummantelung (10) aus Kunststoff, die Lichtleitfasern enthält, besteht, und die in Achsrichtung der gewendelten Bündelader elastisch dehnbar ist,
**dadurch gekennzeichnet,**
daß die Lichtleitfasern des Lichtleiters (1) entgegen der bei der Längung der gewendelten Bündelader auftretenden Torsion derart vortordiert sind, daß sie sich bei der Längung der gewendelten Bündelader aus ihrem Ruhezustand heraus in bezug auf die Vortorsion mindestens teilweise entspannen.

2. Lichtleiter nach Anspruch 1, **dadurch gekennzeichnet,** daß die Torsion der Lichtleitfasern des Lichtleiters (1) bei maximal gedehnter gewendelter Bündelader derjenigen im entspannten Zustand im wesentlichen entgegengesetzt gleich ist.

3. Lichtleiter nach einem der vorangehenden Ansprüche, **dadurch gekennzeichnet,** daß die Gestalt der gewendelten Bündelader im wesentlichen durch die Elastizität der Ummantelung (10) bestimmt wird.

4. Lichtleiter nach einem der vorangehenden Ansprüche, **dadurch gekennzeichnet,** daß mehrere optisch voneinander getrennte Lichtleitfaserbündel (7, 8) innerhalb der Ummantelung (10) vorgesehen sind.

5. Lichtleiter nach einem der vorangehenden Ansprüche, **dadurch gekennzeichnet,** daß die einzelnen Lichtleitfasern des Lichtleiters (1) außen einen größeren Brechungsindex aufweisen als innen.

6. Lichtleiter nach einem der vorangehenden Ansprüche, **dadurch gekennzeichnet,** daß die Ummantelung (10) aus Polyurethan oder PVC besteht.

7. Verfahren zur Herstellung eines Lichtleiters, **dadurch gekennzeichnet,** daß die Lichtleitfasern im noch nicht gewendeltem Zustand des Lichtleiters (1) vor dem Aufbringen der Ummantelung (10) entgegengerichtet zu ihrer sich bei der Längung der gewendelten Bündelader aus der entspannten Stellung heraus ergebenden Torsion vortordiert werden.

## Claims

1. A light guide (1), comprising a coiled bundle conductor which comprises a plastic sheath (10) containing optical fibres and which is elastically extensible in the axial direction of the coiled bundle conductor, characterised in that the optical fibres of the light guide (1) are pre-twisted in the opposite direction to the torsion which occurs on elongation of the coiled bundle conductor, in such a way that they are at least partly slackened relative to the pre-torsion when the coiled bundle conductor is elongated out of its quiescent state.

2. A light guide according to claim 1, characterized in that when the coiled bundle conductor is extended to the maximum, the torsion of the optical fibres of the light guide (1) is substantially opposite and equal to that in the slack state.

3. A light guide according to any of the preceding claims, characterized in that the shape of the coiled bundle conductor is determined substantially by the elasticity of the sheath (10).

4. A light guide according to any of the preceding claims, characterised in that a plurality of optically separated optical fibre bundles (7,8) are provided inside the sheath (10).

5. A light guide according to any of the preceding claims, characterized in that the individual optical fibres of the light guide (1) have a higher refractive index externally than internally.

6. A light guide according to any of the preceding claims, characterized in that the sheath (10) is made of polyurethane or PVC.

7. A method of making a light guide, characterized in that in the as yet uncoiled state of the light guide (1) before the sheath (10) is applied, the optical fibres are pre-twisted in the opposite direction to their torsion occurring on elongation of the coiled bundle conductor from the slackened position.

## Revendications

1. Conducteur de lumière (1) composé d'un câble à faisceaux spiralé, qui est composé d'un gainage (10) en matière plastique renfermant des fibres conductrices de lumière, et qui peut être allongé élastiquement dans la direction axiale du câble à faisceaux spiralé,
caractérisé
en ce que les fibres conductrices de lumière du conducteur de lumière (1) sont préalablement tordues en sens inverse de la torsion qui se produit lors de l'allongement du câble à faisceaux spiralé, de telle manière que, lors de l'allongement du câble à faisceaux spiralé, à partir de son état de repos, ces fibres se détendent au moins partiellement par rapport à la torsion préalable.

2. Conducteur de lumière selon la revendication 1, caractérisé en ce que la torsion des fibres conductrices de lumière du conducteur de lumière (1) lorsque le câble à faisceaux spiralé est allongé au maximum est sensiblement égale et opposée à celle qui existe à l'état détendu.

3. Conducteur de lumière selon une des revendications précédentes, caractérisé en ce que la conformation du câble à faisceaux spiralé est sensiblement fixée par l'élasticité du gainage (10).

4. Conducteur de lumière selon une des revendications précédentes, caractérisé en ce que plusieurs faisceaux de fibres conductrices de lumière (7, 8), séparés optiquement les uns des autres, sont prévus à l'intérieur du gainage (10).

5. Conducteur de lumière selon une des revendications précédentes, caractérisé en ce que les fibres conductrices de lumière élémentaires du conducteur de lumière (1) présentent un plus grand indice de réfraction à l'extérieur qu'à l'intérieur.

6. Conducteur de lumière selon une des revendications précédentes, caractérisé en ce que le gainage (10) est composé de polyuréthane ou de PVC.

7. Procédé de fabrication d'un conducteur de lumière, caractérisé en ce que, avant la mise en place du gainage (10), on impose aux fibres conductrices de lumière, dans l'état encore non spiralé du conducteur de lumière (1) une torsion préalable inverse de la torsion qui s'établit lors de l'allongement du câble à faisceaux spiralé à partir de son état détendu.
